# EUROPÄISCHE PATENTSCHRIFT

(11) **EP 0 906 842 B1**
(45) Veröffentlichungstag und Bekanntmachung des Hinweises auf die Patenterteilung: **22.01.2003**
(21) Anmeldenummer: 98118637.2
(22) Anmeldetag: 02.10.1998
(51) Int. Cl.: B60K 7/00

(54) **Radantriebsvorrichtung**
Wheel drive device
Dispositif d'entraînement des roues

(30) Priorität: 04.10.1997 DE 19743906
(43) Veröffentlichungstag der Anmeldung: 07.04.1999
(73) Patentinhaber: Voith Turbo GmbH & Co. KG, 89522 Heidenheim (DE)
(72) Erfinder: Mühlberger, Uwe, 89522 Heldenheim (DE)
(74) Vertreter: Dr. Weitzel & Partner

(56) Entgegenhaltungen:
- DE-A- 2 109 372
- DE-A- 2 302 898
- DE-A- 4 120 262
- DE-A- 4 335 848

## Beschreibung

Die Erfindung betrifft eine Radantriebsvorrichtung, insbesondere einen Einzelradantrieb, im einzelnen mit den Merkmalen aus dem Oberbegriff des Anspruchs 1. Eine derartige Radantriebs vorrichtung ist aus der DE 210 9372 bekannt.

Radantriebsvorrichtungen, insbesondere Einzelradantriebe, sind aus einer Vielzahl von Druckschriften bekannt, beispielsweise DE 195 27 951 A1.

Die Druckschrift DE 195 27 951 A1 offenbart einen Antrieb über die Radnabe mittels einer Antriebsmaschine in Form eines Elektromotors, insbesondere einer Transversalflußmaschine, welche achsversetzt zur Radnabenachse angeordnet ist und deren Abtriebswelle mittels eines Ritzels mit einem innenverzahnten Hohlrad kämmt. Das Ritzel ist zu diesem Zweck drehfest mit der Abtriebswelle der Antriebsmaschine koppelbar, während das Hohlrad wenigstens mittelbar drehfest mit der Radachse bzw. der Radnabenachse verbindbar ist. Vorzugsweise sind dabei sowohl das Ritzel mit der Abtriebswelle und das Hohlrad mit der Rad- bzw. Radnabenachse drehfest verbunden. Die Drehmomentenübertragung von der Radachse zur Radnabe erfolgt über wenigstens eine Planetenradstufe. Diese Lösung ermöglicht den Einsatz von elektrischen Antriebsmaschinen mit hoher Leistungsdichte zum Radnabenantrieb, und damit der Übertragung hoher Drehmomente auf die Radnabe. Problematisch bei einer derartigen Lösung ist jedoch die Verwendung einer herkömmlichen Scheibenbremseinrichtung, da deren Betätigungselemente schwerer zugänglich sind und des weiteren diese auch die Anordnung und/oder Abmessungen der Transversalflußmaschine bzw. der Drehmomenten-/Drehzahl-übertragenden Bauelemente bestimmt. Des weiteren sind zur Realisierung der Drehmomentenübertragung eine Vielzahl von Getriebeelementen vorzusehen, da wenigstens ein Vorgelege und eine Drehzahl-Drehmomentwandlungseinrichtung erforderlich sind.

Der Erfindung liegt die Aufgabe zugrunde, eine Radantriebsvorrichtung gemäß dem Oberbegriff des Anspruchs 1 derart weiterzuentwickeln, daß eine möglichst kompakte Antriebseinheit mit hoher Leistungsdichte geschaffen wird, welche den Einsatz herkömmlicher bzw. standardmäßiger Scheibenbremseinrichtungen ohne zusätzliche Modifikation ermöglichen und gleichzeitig auch deren Betätigung bzw. Funktion nicht beeinträchtigen. Insbesondere soll die Antriebseinheit hinsichtlich ihrer Abmessungen und Anordnung nicht durch die Betätigungselemente herkömmlicher Bremseinrichtungen, insbesondere einer Scheibenbremseinrichtung, beschränkt sein. Des weiterensoll die Antriebseinheit möglichst wenig Bauraum erfordern und möglichst wenig Getriebeelemente bzw. Bauteile aufweisen.

Die erfindungsgemäße Lösung der Aufgabe ist durch die Merkmale des Anspruchs 1 charakterisiert. Vorteilhafte Ausgestaltungen sind in den Unteransprüchen wiedergegeben.

Die Radantriebsvorrichtung zum Antrieb eines Rades, umfassend eine Felge, einen mit der Felge gekoppelten Radkörper sowie eine Radnabe, welche sich auf einer Radachse abstützt, weist wenigstens eine elektrische Antriebsmaschine auf, welche als Wechselstrommaschine - vorzugsweise in Form einer Transversalflußmaschine - ausgeführt ist. Die elektrische Antriebsmaschine umfaßt wenigstens einen Stator und einen Rotor. Der Rotor steht dabei wenigstens mittelbar in Triebverbindung mit der Radnabe. Erfindungsgemäß ist der Stator bzw. das statortragende Bauelement, d.h. das Bauelement an welchem die Statorelemente angeordnet und befestigt sind, derart ausgebildet und angeordnet, daß dieses die Funktion der Radachse übernimmt. Dies bedeutet, daß das Rad sich auf dem statortragenden Bauelement bzw. dem Stator abstützt. Die Abstützung erfolgt dabei über eine in axialer Richtung betrachtet innere Lageranordnung und eine äußere Lageranordnung, wobei erfindungsgemäß wenigstens der Rotor der elektrischen Antriebsmaschine zwischen diesen beiden Lagern angeordnet ist. Diese Anordnung ermöglicht, in axialer Richtung betrachtet, die vollständige Integration der elektrischen Antriebsmaschine im Bereich der Erstreckung der Felge des Rades in axialer Richtung, und damit innerhalb der Felgenbreite. An diese Antriebseinrichtung kann sich dann ohne Probleme eine standardisierte Bremseinrichtung, vorzugsweise in Form einer Scheibenbremseinrichtung, anschließen, ohne daß deren Betätigungselemente eine Auswirkung auf die Auslegung der Größe der elektrischen Antriebsmaschine sowie deren Anordnung hat.

Die erfindungsgemäße Anordnung des Rotors und die Funktion des statortragenden Elementes als Radachse ermöglicht es, die elektrische Antriebsmaschine, vollständig in das Rad zu integrieren und eine kompakte Einzelradantriebsvorrichtung mit geringer Bauelementenanzahl zu schaffen.

Bei Ausgestaltung der Antriebsvorrichtung mit Integration der elektrischen Antriebsmaschine und der mechanischen Drehzahl-/Drehmomentenwandlungseinrichtung zwischen den Radlagem ist des weiteren erfindungsgemäß die elektrische Antriebsmaschine nicht gegenüber der mechanischen Drehzahl-/Drehmomentenwandlungseinrichtung abgedichtet. In diesem Fall kann auf einfache Weise das dem mechanischen Drehzahl-/Drehmomentenwandler zugeführte Schmiermittel gleichzeitig zum Wärmetransport und damit zur Kühlung des Rotors der elektrischen Antriebsmaschine, insbesondere der Transversalflußmaschine, genutzt werden. Dabei wird der mechanischen Drehzahl-/Drehmomentenwandlungseinrichtung eine Schmiermittelmenge zugeführt, welche eine Teilbefüllung der elektrischen Maschine zuläßt. Die nicht direkt kühlbaren Bereiche des Rotors der elektrischen Maschine werden dann mittels eines aufgrund von Zerstäubung entstehenden Schmiermittel-Luftgemisches gekühlt. Dazu ist es jedoch erforderlich, daß sich in Einbaulage unterhalb der Rotorachse im radial äußeren Bereich des Rotors ein Schmiermittelsumpf ausbildet. Vorzugsweise sollte sich zumindest im radial äußeren, auch als Luftspalt bezeichneten Zwischenraum in Einbaulage zwischen Rotor und Stator oder zwischen Rotor und statortragendem Element betrachtet, unterhalb der Rotorachse im mathematischen Sinn ein Schmiermittel- bzw. Kühlmittelsumpf ausbilden. Im Betrieb der Wechselstrommaschine, insbesondere des Rotors, wird das Schmiermittel, welches für den Rotor der elektrischen Maschine als Kühlmittel fungiert, durch die Rotorrotation mitgerissen und aufgrund der dadurch auf das Schmier- bzw. Kühlmittel wirkenden Kräfte zerstäubt. Es entsteht im wesentlichen in Abhängigkeit von der Drehzahl der Rotorwelle und des Füllungsstandes ein Kühl-Schmiermittel-Luftgemisch im Luftspalt zwischen Rotor und Stator bzw. statortragendem Element. Diese übernimmt dann durch Wärmeströmung und Wärmeübergang den Wärmetransport vom Rotor zum beispielsweise wassergekühlten Stator bzw. dem wassergekühlten statortragenden Element. Das Kühlmittel-Luftgemisch übernimmt nur den Wärmetransport, weshalb keine zusätzlichen Einrichtungen zur Kühlung des Kühlmittels vorgesehen werden müssen. Vorzugsweise wird dabei ein Schmiermittel bzw. Kühlmittel mit geringer Viskosität, d.h. mit einer geringen inneren Reibung infolge von Kraftwirkungen zwischen den Molekülen, verwendet. Vorzugsweise wird zur Erzielung des Kühleffektes die Schmiermittelmenge derart gewählt, daß im Nichtbetrieb der Wechselstrommaschine sich ein Schmiermittel- bzw. Kühlmittelspiegel in einer Höhe einstellt, welcher im Bereich des bzw. der bezogen auf die Rotorachse radial innenliegenden Zwischenräume zwischen Rotor und Stator liegt. Eine Befüllung mit einem höheren Schmier- bzw. Kühlmittelspiegel ist ebenfalls denkbar.

Die genannte Möglichkeit der Ölnebelkühlung kann auch als Maßnahme zur zusätzlichen Kühlung in Kombination mit herkömmlichen Kühlmaßnahmen bei jeder Art der verwendeten Wechselstrommaschinen eingesetzt werden. Die Auswahl der geeigneten Kombinationen aus Ölnebelkühlung mit herkömmlichen Kühlsystemen zur Statorkühlung liegt dabei im Ermessen des Fachmannes und richtet sich nach den konkreten Erfordernissen des Einsatzfalles. Die Kühlung des Stators selbst wiederum kann auf unterschiedliche Art und Weise erfolgen, direkt oder indirekt mittels unterschiedlicher Kühlmedien. Im einfachsten Fall ist der Stator an entsprechende Kühleinrichtungen angeschlossen oder im Statorgrundkörper sind mit Kühlmittel befüllbare Kühlmittelkanäle vorgesehen.

Zusätzlich besteht die Möglichkeit, die Ölnebelkühlung des Rotors mit bereits bekannten Rotorkühlmaßnahmen, insbesondere zur lokalen Kühlung von Rotorabschnitten, zu kombinieren. Beispielsweise seien genannt:
- Vorsehen wenigstens eines Kühlkanales im Stator in der Nähe der Trägerscheibe, welcher von einem Kühlfluid durchströmbar ist, wobei der Kühlkanal von der Trägerscheibe nur durch eine Kanalabdeckung minimaler Dicke und dem Zwischenraum zwischen Rotor und Stator abgetrennt ist.
- Axialer Verlauf des Kühlkanales und Anordnung in einer Distanzscheibe, welche zwischen einem Paar von Statorabschnitten angeordnet ist. Die Distanzscheibe ist in radialer Richtung symmetrisch gegenüberliegend zur Trägerscheibe angeordnet und gegenüber den Statorabschnitten thermisch isoliert. Die Distanzscheibe besteht dabei vorzugsweise aus einem Material, welches magnetisch passiv ist und eine gute Wärmeleitfähigkeit besitzt. Diese weist auf beiden Seiten des Kühlkanals im wesentlichen radial verlaufende breitflächige Hohlräume auf, welche eine thermische Isolierung gegenüber den benachbarten Bereichen des Stators bilden. Die Hohlräume wiederum können mit Luft oder anderen Isolationsmaterialien gefüllt sein.
- Anordnung des Kühlkanales im Statorgrundkörper bzw. im statortragenden Element
- Vorsehen von zueinander komplementären Verzahnungen der einander gegenüberliegenden Bereiche von Trägerscheibe und des Stators im Bereich der Kühlkanäle, welche im wesentlichen parallel zueinander verlaufende Flächen aufweisen und durch einen Luftspalt voneinander getrennt sind.
- Aufbau des Rotors derart, daß die ringförmigen Anordnungen aus wechselweise magnetisierbaren Magneten und Weicheisenelementen durch einen Isolierring aus magnetisch passivem und elektrisch nicht leitendem Material verbunden sind. In diesen Isolierring sind in Umfangsrichtung Speicherzellen eingearbeitet, welche mit Phasenübergangsmaterial gefüllt sind, dessen Schmelzpunkt unterhalb einer vorgegebenen Temperatur liegt.

Bezüglich weiterer möglicher denkbarer Maßnahmen wird zusätzlich auf die Druckschrift DE 43 35 848 A1 verwiesen.

Im einfachsten Fall kann der Durchtrieb vom Rotor direkt auf die Radnabe, beispielsweise durch Realisierung einer drehfesten Verbindung zwischen beiden, erfolgen. Vorzugsweise ist jedoch in Kraftflußrichtung eine Drehzahl-/Drehmomentenwandlungseinrichtung, vorzugsweise eine mechanische Drehzahl-/Drehmomentenwandlungseinrichtung, nachgeschaltet. Die Leistungsübertragung erfolgt dann vom Rotor der elektrischen Antriebsmaschine über die mechanische Drehzahl-/Drehmomentenwandlungseinrichtung auf die Radnabe. Die Aufgabe der Drehzahl-/Drehmomentenwandlungseinrichtung besteht im wesentlichen in einer Übersetzung ins Langsame vom Rotor zur Radnabe. Vorzugsweise ist die mechanische Drehzahl-/Drehmomentenwandlungseinrichtung derart ausgebildet, daß diese wenigstens einen Planetenradsatz umfaßt. Dabei bildet ein Getriebeelement des Planetenradsatzes den Eingang des mechanischen Drehzahl-/Drehmomentenwandlers und ein weiteres zweites Getriebeelement den Ausgang, welcher wenigstens mittelbar mit der Radnabe koppelbar ist. Vorzugsweise wird zur Erfüllung der Funktionen das erste Getriebeelement vom Sonnenrad des Planetenradsatzes gebildet, welches beispielsweise über eine Hohlwelle mit dem Rotor der elektrischen Antriebsmaschine in Triebverbindung steht. Den Abtrieb des Planetenradsatzes bildet vorzugsweise der Steg, welcher drehfest mit einer Antriebswelle, welche gleichzeitig die Verbindungswelle zur Radnabe ist, koppelbar ist. Denkbar ist theoretisch auch die Verwendung von Stirnradsätzen, bevorzugt werden jedoch Planetenradsätze.

Das statortragende Bauelement bildet im Einbauzustand mit dem Stator eine bauliche Einheit. Vorzugsweise sind das statortragende Bauelement und die einzelnen Statorelemente als einzelne Bauelemente ausgeführt, welche miteinander lösbar verbindbar sind. Der in radialer Richtung betrachtete Außenumfang des statortragenden Bauelementes bildet wenigstens eine Anlagefläche für die innere bzw. die äußere Lageranordnung, über welche sich das Rad auf dem als Radachse fungierenden statortragenden Bauelement abstützt. Vorzugsweise ist zur Schaffung einer möglichst kompakten abgeschlossenen Baueinheit das statortragende Element derart ausgebildet, daß dieses die elektrische Antriebsmaschine und den mechanischen Drehzahl-/Drehmomentenwandler in Umfangsrichtung im wesentlichen umschließt, d.h. sozusagen ein Gehäuse bildet. Aus rein konstruktiven Gründen ist das statortragende Bauelement vorzugsweise mehrteilig ausgeführt und umfaßt wenigstens zwei Bauelemente, welche miteinander in oben beschriebener Weise lösbar verbindbar sind. In Analogie gilt dies auch für die Radnabe, welche ebenfalls wenigstens zwei Bauelemente umfaßt, wobei beide Bauelemente lösbar mit dem Radkörper, welcher vorzugsweise als Radscheibe ausgeführt wird, verbindbar sind. Die Radnabe ist dabei derart ausgebildet, daß diese ebenfalls vorzugsweise im wesentlichen über den gesamten Umfangsbereich die Radachse bzw. die elekrische Antriebsmaschine und die mechanische Drehzahl-/Drehmomentenwandlungseinrichtung umschließt.

Die elektrische Antriebsmaschine, ist vorzugsweise als Transversalflußmaschine, d.h. als Wechselstrommaschine, welche auf dem Grundprinzip der Wanderfelderzeugung basiert, ausgebildet und, kann vielgestaltig ausgeführt sein. Vorzugsweise weist diese jedoch einen im wesentlichen symmetrischen Aufbau auf. Die Transversalflußmaschine kann dabei entsprechend den Ausführungen, beschrieben in den folgenden Druckschriften:
3. DE 35 36 538 A1
4. DE 37 05 089 C1
5. DE 39 04 516 C1
6. DE 41 25 779 C1
ausgebildet werden. Die in diesen Druckschriften beschriebenen elektrischen Antriebsmaschinen umfassen wenigstens einen Stator mit wenigstens einer Ankerwicklung und einen der Ankerwicklung gegenüberliegenden Rotor. Der Rotor besteht dabei aus wenigstens zwei nebeneinander angeordneten, durch eine Zwischenlage aus magnetisch und elektrisch nicht leitendendem Material getrennten Ringelementen, die in Umfangsrichtung eine Vielzahl von wechselweise angeordneten polarisierten Magneten und Weicheisenelementen aufweisen. Eine derartige Anordnung zweier Ringelemente bildet eine Polstruktur. Bei einer symmetrisch gestalteten Transversalflußmaschine ist jeweils eine Polstruktur zu beiden Seiten an einer zentralen Trägerscheibe angeordnet. Vorzugsweise ist der Stator derart ausgebildet, daß dieser einen Außen- und einen Innenstator umfaßt, d.h. daß der Rotor in radialer Richtung betrachtet zwischen dem Außenstator und dem Innenstator rotiert. Denkbar ist jedoch auch der Einsatz von Ausführungen mit nur einem Innenstator oder einem Außenstator.

Die Ausführung der Radantriebsvorrichtung in oben beschriebener Weise mit zusätzlicher Ölnebelkühlung ermöglicht die Gestaltung eines sehr kompakten Einzelradantriebes mit einfacher Realisierung zusätzlicher Bremsfunktionen bei hoher Leistungsdichte und gleichzeitig geringem konstruktivem Aufwand. Die Anordnung der elektrischen Antriebsmaschine und des mechanischen Drehzahl-/Drehmomentenwandlers zwischen der Radlagerung bietet die Möglichkeit der Bereitstellung von Bauraum für serienmäßige Bremseinrichtungen, insbesondere Scheibenbremseinrichtungen, welche keinerlei Einfluß auf die Auslegung der elektrischen Antriebsmaschine und des mechanischen Drehzahl-/Drehmomentenwandlers haben.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung den Grundaufbau und das Grundprinzip einer erfindungsgemäßen Ausführung einer Antriebsvorrichtung ohne Darstellung einer mechanischen Orehzahl-1 Drehmomenten wandlungseinrichtung;
- Figur 2: verdeutlicht beispielhaft eine bevorzugte Ausführung einer erfindungsgemäß gestalteten Radantriebsvorrichtung für den Einsatz als Einzelradantrieb.

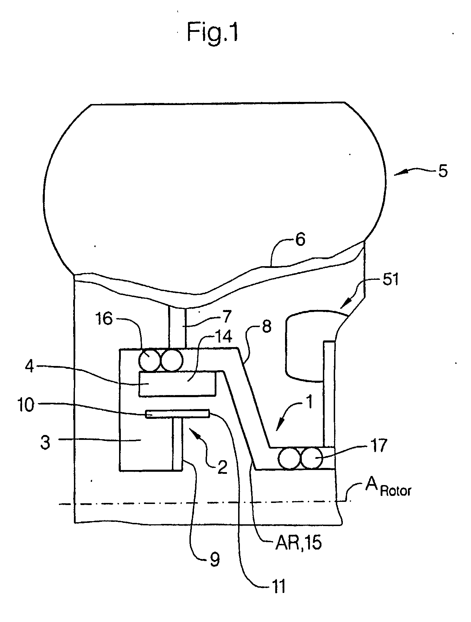

Die Figur 1 verdeutlicht anhand einer schematisch stark vereinfachten Darstellung den Aufbau und das Grundprinzip einer erfindungsgemäß ausgeführten Radantriebsvorrichtung 1, welche als Einzelradantrieb ausgeführt ist. Die Radantriebsvorrichtung 1 umfaßt eine elektrische Antriebsmaschine 2 mit wenigstens einem Rotor 3 und einem Stator 4. Die elektrische Antriebsmaschine 2 ist vorzugsweise als Transversalflußmaschine ausgeführt, d.h. als auf dem Grundprinzip der Wanderfelderzeugung basierende elektrische Maschine. Zur Realisierung des Einzelradantriebes ist die elektrische Antriebsmaschine 2 dem Rad 5 zugeordnet. Dieses weist eine Felge 6, einen Radkörper 7 sowie eine Radnabe 8 auf. Die Felge 6 ist über den Radkörper 7 mit der Radnabe 8 verbunden. Die Ausführung der elektrischen Antriebsmaschine 2, insbesondere der Transversalflußmaschine, kann verschiedenartig erfolgen. Vorzugsweise weist diese einen symmetrischen Aufbau auf. Die elektrische Antriebsmaschine 2 umfaßt in diesem Fall eine zentrale Trägerscheibe 9 sowie dieser beidseitig zugeordnete Polstrukturen 10 bzw. 11 auf. Die einzelnen Polstrukturen 10 bzw. 11 umfassen dabei jeweils wenigstens zwei Ringe aus wechselweise in Umfangsrichtung hintereinander angeordneten Magnetanordnungen und Weicheisenelementen, welche über einen Ring aus elektrisch nicht gleitfähigem Material miteinander verbunden sind.

Der dem Rotor 3 zugeordnete Stator 4 umfaßt wenigstens einen Außenstator 14, welcher ein erstes, hier im Einzelnen nicht dargestelltes Außenstatorelement 14a und ein zweites, hier ebenfalls im Einzelnen nicht dargestelltes Außenstatorelement 14b aufweist, die den Polstrukturen 10 bzw. 11 zugeordnet sind. Die Statorelemente weisen einen U-förmigen Querschnitt auf, welche eine Ankerwicklung umschließen.

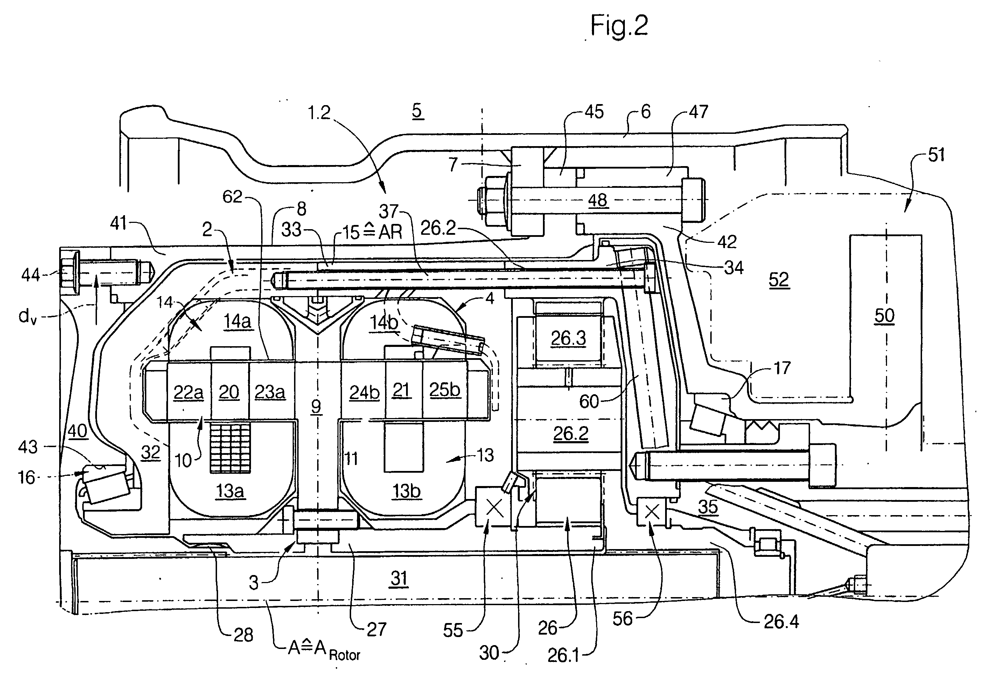

In der Figur 2 ist demgegenüber eine Ausführung beschrieben, bei welcher der dem Rotor 3 zugeordnete Stator 4 wenigstens jeweils einen Innenstator 13 und einen Außenstator 14 umfaßt. Der Innenstator 13 umfaßt in diesem Fall ebenfalls zwei Statorelemente, ein erstes Innenstatorelement 13a und ein zweites Statorinnenelement 13b, die jeweils den einzelnen Polstrukturen 10 bzw. 11 zugeordnet sind. In Analogie ist der Außenstator 14 in zwei Außenstatorelemente 14a, 14b unterteilt, die ebenfalls den einzelnen Polstrukturen 10 bzw. 11 zugeordnet sind. Zur Realisierung der Funktionsweise ist es erforderlich, daß der Stator 4 wenigstens einen Außenstator 14 umfaßt. Die einzelnen Statorelemente, die Innenstatorelemente 13a, 13b und die Außenstatorelemente 14a und 14b umfassen vorzugsweise eine Vielzahl von in Umfangsrichtung hintereinander in bestimmten Abständen zueinander angeordneten Schnittbandkernen. Vorzugsweise sind diese Schnittbandkerne aus hintereinander angeordneten Blechelementen ausgeführt.

Der Rotor 3 der elektrischen Maschine 2 (in Fig. 1), insbesondere der Transversalflußmaschine, steht wenigstens mittelbar mit der Radnabe 8 in Triebverbindung. Die Radnabe 8 wiederum ist mit dem Radkörper 7 drehfest verbunden und damit mit der Felge 6. Erfindungsgemäß ist vorgesehen, daß das den Stator 4 tragende Element, hier mit 15 bezeichnet, als Radachse A_{R} ausgeführt ist. Die einzelnen Statorelemente, insbesondere die Außenstatorelemente 14a und 14b, können dabei mit dem statortragenden Element 15 eine bauliche Einheit dahingehend bilden, daß diese als ein Bauteil ausgeführt sind. Es ist jedoch auch denkbar, die bauliche Einheit durch Kopplung der einzelnen Statorelemente, insbesondere der Außenstatorelemente 14a bzw. 14b, mit dem statortragenden Element 15 zu realisieren.

Die Abstützung des Rades 5 über den Radkörper 7 und die Radnabe 8 erfolgt mittels entsprechender Lageranordnungen, hier einer ersten äußeren Lageranordnung 16 und einer zweiten inneren Lageranordnung 17. Über diese Lageranordnungen 16 bzw. 17 stützt sich die Radnabe 8 auf der Radachse A_{R} in Form des statortragenden Bauelementes 15 ab.

Erfindungsgemäß ist dazu weiter vorgesehen, daß wenigstens der Rotor 3 der elektrischen Antriebsmaschine 2 in axialer Richtung zwischen der äußeren Lageranordnung 16 und der inneren Lageranordnung 17 angeordnet ist.

Bei Inbetriebnahme der elektrischen Antriebsmaschine 2, insbesondere der Transversalflußmaschine, wird die elektrische Leistung in mechanische umgewandelt und über den Rotor 3, welcher mit der Radnabe 8 in Triebverbindung steht, vorzugsweise drehfest mit dieser gekoppelt ist, auf das Rad übertragen. Die erfindungsgemäße Lösung ermöglicht eine sehr kompakte Gestaltung der Radantriebsvorrichtung 1, insbesondere eines Einzelradantriebes, welcher nahezu vollständig in axialer Richtung betrachtet in einem Bereich angeordnet ist, welcher durch die axiale Erstreckung der Felge des Rades 5 beschrieben wird. Diese Anordnung ermöglicht es, die Zugängigkeit zu den verwendeten Radbremsen und deren Funktionstätigkeit zu gewährleisten, wobei die Radbremsen vorzugsweise als Scheibenbremseinrichtung 51 ausgebildet sind. Die Scheibenbremseinrichtung schließt sich in axialer Richtung an die Radantriebsvorrichtung 1 an, wobei die Scheibenbremseinrichtung 51 außerhalb der Radlagerung 17,16 bzw. in einem axialen Bereich, bezogen auf die axiale Erstreckung des Fahrzeuges in einem Bereich, welcher durch die Anordnung der inneren Lagerung 17 und der Fahrzeugmittelachse beschrieben wird, angeordnet ist.

Die Figur 1 verdeutlicht in lediglich stark vereinfachter und schematisierter Darstellung den Grundaufbau der erfindungsgemäß gestalteten Antriebsvorrichtung 1. In der Figur 2 ist eine vorzugsweise verwendete Ausgestaltung der erfindungsgemäßen Ausführung dargestellt. Der Grundaufbau und das Grundprinzip entsprechen im wesentlichen den in der Figur 1 beschriebenen. Für gleiche Elemente werden daher die gleichen Bezugszeichen verwendet.

Die Radantriebsvorrichtung 1.2 umfaßt auch hier eine elektrische Maschine 2.2, welche vorzugsweise in Form einer Transversalflußmaschine ausgeführt ist. Die elektrische Maschine 2 umfaßt einen Rotor 3 und einen Stator 4 Die elektrische Maschine 2, welche als Wechselstrommaschine, die nach dem Transversalflußprinzip arbeitet, ausgeführt ist, kann verschiedenartig gestaltet sein. Denkbar sind beispielsweise Ausführungen, wie aus den Druckschriften
3. DE 35 36 538 A1
4. DE 37 05 089 C1
5. DE 39 04 516 C1
6. DE 41 25 779 C1
bekannt. Vorzugsweise weist die elektrische Antriebsmaschine 2, insbesondere die Transversalflußmaschine, einen im wesentlichen symmetrischen Aufbau auf. Der Rotor 3 wird dabei von einer Trägerscheibe 9 und beidseitig sich von der zentralen Trägerscheibe 9 in axialer Richtung erstreckenden Polstrukturen 10 und 11 gebildet. Jede Polstruktur 10 bzw. 11 besteht dabei aus wenigstens zwei nebeneinander angeordneten, durch eine Zwischenlage aus magnetisch und elektrisch nicht leitendem Material 20 bzw. 21 getrennten Ringelementen 22 bzw. 23 für die Polstruktur 10 und 24 bzw. 25 für die Polstruktur 11. Die Ringelemente weisen dazu in Umfangsrichtung eine Vielzahl von wechselweise angeordneten polarisierten Magneten 23a bzw. 22a und 24a bzw. 25a und Weicheisenelementen 23b, 22b, 24b und 25b auf. Denkbar ist jedoch eine Ausführung mit nur einer an einer zentralen Trägerscheibe 9 angeordneten Polstruktur 10. Der dem Rotor 3 zugeordnete Stator 4 umfaßt dann wenigstens einen Außenstator 14 oder einen Innenstator 13. Vorzugsweise sind ein weiterer Innenstator 13, welcher sich in radialer Richtung bis zu einem Durchmesser d erstreckt, welcher kleiner ist als der Innendurchmesser dᵢ des Rotors 3 bzw. ein weiterer Außenstator 14 vorgesehen. Im dargestellten Fall sind sowohl ein Außenstator 14 und ein Innenstator 13 vorgesehen. Dies entspricht ebenfalls einer bevorzugten Ausführung. Theoretisch ist es jedoch denkbar, daß lediglich nur ein Innen- oder ein Außenstator vorgesehen werden. Der Stator 4 ist mit einem statortragenden Element 15 derart verbunden, daß diese im Einbauzustand eine bauliche Einheit bilden. Das statortragende Element 15 ist dazu wenigstens über einen Teilbereich der Statorfläche insbesondere der Statoraußenfläche mit diesem verbunden. Es besteht dabei theoretisch auch die hier nicht dargestellte Möglichkeit, den Stator 4 und das statortragende Element 15 aus einem Bauteil herzustellen. Das statortragende Element 15 bzw. der mit diesem gekoppelte Stator 4 übernimmt die Funktion der Radachse, d.h. die Abstützung der Momente. Auf diesem stützt sich das Rad 5, die Felge 6 über den Radkörper 7, welcher im dargestellten Fall als Radscheibe ausgeführt ist, und die Radnabe 8 ab. Vorzugsweise ist zur Untersetzung bzw. zur Übersetzung ins Langsame der elektrischen Antriebsmaschine 2 eine Drehzahl-/Drehmomentenwandlungseinrichtung in Leistungsübertragungsrichtung nachgeschaltet. Die Kopplung bzw. Realisierung der Triebverbindung zwischen dem Rotor 3 der elektrischen Antriebsmaschine 2 und der Radnabe 8 erfolgt über die mechanische Drehzahl-/Drehmomentenwandlungseinrichtung 26. Zu diesem Zweck ist der Rotor 3 der elektrischen Antriebsmaschine 2 drehfest mit einer Hohlwelle 27 gekoppelt, welche sich über ein Lager, vorzugsweise ein Nadellager 28, auf der Radnabe 8 abstützt und dem Eingang der mechanischen Drehzahl-/Drehmomentenwandlungseinrichtung 26 gekoppelt ist. Die mechanische Drehzahl-/Drehmomentenwandlungseinrichtung 26 umfaßt vorzugsweise wenigstens einen Planetenradsatz 30. Dieser weist wenigstens ein Sonnenrad 26.1, ein Hohlrad 26.3, Planetenräder 26.2 und einen Steg 26.4 auf. Das Sonnenrad 26.1 ist dazu vorzugsweise in die Hohlwelle 27 eingearbeitet. Es besteht jedoch auch theoretisch die Möglichkeit, dieses als separates Bauteil drehfest mit der Hohlwelle 27 zu verbinden. Das Hohlrad 26.3 ist am statortragenden Bauteil 15 angeordnet. Vorzugsweise ist dieses in das statortragende Bauteil 15 bzw. bei Bestehen des statortragenden Bauteils 15 aus mehreren miteinander kraft- und/oder formschlüssig verbundenen Bauelementen, in eines von diesen eingearbeitet. Den Ausgang bzw. den Abtrieb des mechanischen Drehzahl-/Drehmomentenwandlers 26 bildet der Steg 26.4. Dieser ist drehfest mit einer sogenannten Antriebswelle 31 verbunden. Die Antriebswelle 31 bildet die Verbindungswelle zwischen dem Ausgang des mechanischen Drehzahl-/Drehmomentenwandlers, hier dem Steg 26.4, und der Radnabe 8. Diese ist ebenfalls drehfest mit der Antriebswelle 31 gekoppelt. Die drehfeste Verbindung wird dabei vorzugsweise jeweils mittels einer Keilwellenverbindung realisiert. Die Abstützung des Rotors 3 der elektrischen Antriebsmaschine 2, des mechanischen Drehzahl-/Drehmomentenwandlers 26 und der Radnabe 8 erfolgt auf dem statortragenden Bauelement 15 über die äußere Lageranordnung 16. Diese ist vorzugsweise als Schrägrollenlager ausgeführt. Die Abstützung des Rades 5 erfolgt des weiteren über die innere Lageranordnung 17 auf dem statortragenden Bauelement 15 bzw. einem mit diesem gekoppelten Bauteil. Aus der Figur 2 ist ersichtlich, daß die Anordnung der elektrischen Antriebsmaschine 2 sowie des mechanischen Drehmomenten-/Drehzahlwandlers 26 zwischen der Radlagerung, d.h. der Lager, über welche sich das Rad auf der Radachse, als welche hier das statortragende Bauelement 15 fungiert, erfolgt. Im dargestellten Fall ist das statortragende Bauelement 15 aus mehreren Bauelementen, einem ersten Bauelement 32, einem zweiten Bauelement 33 sowie einem dritten Bauelement 34 und einem vierten Bauelement 35 zusammengefügt. Das erste Bauelement 32 trägt dabei im dargestellten Fall wenigstens jeweils einen Außenstator 14a und einen Innenstator 13a. Das zweite Bauelement 33 bildet die Lagerung bzw. die Verbindung zwischen dem Außenstator 14b und dem Innenstator 13b mit dem statortragenden Element 15. Beide Bauelemente sind vorzugsweise derart ausgeführt, daß diese die elektrische Antriebsmaschine 2 in radialer Richtung im wesentlichen glockenförmig umschlingen. Das dritte Bauelement 34 trägt das Hohlrad 26.2 des mechanischen Drehzahl-/Drehmomentenwandlers 26. Das vierte Bauelement 35 dient der Lageraufnahme der inneren Lageranordnung 17. Aus Montagegründen sind die einzelnen Bauelemente lösbar miteinander verbunden, vorzugsweise mittels Schraubverbindungen 37, welche in Umfangsrichtung auf einem bestimmten Durchmesser d_{V} des statortragenden Bauelementes 15 in bestimmten Abständen zueinander angeordnet sind. Die Radnabe 8 besteht ebenfalls aus einer Mehrzahl von einzelnen Elementen, im einzelnen einem ersten Bauelement 40, einem zweiten Bauelement 41 sowie einem dritten Bauelement 42. Das erste Bauelement 40 der Radnabe 8 bildet dabei den drehfest mit der Antriebswelle 31 gekoppelten Teil der Radnabe 8 sowie die Lagerfläche 43 zur Abstützung bzw. Fixierung der Lageranordnung 16 zur Abstützung der Radnabe 8 auf der Radachse, d.h. dem statortragenden Bauelement 15. Das zweite Bauelement der Radnabe 8, mit 41 bezeichnet, ist mit dem ersten Bauelement lösbar über Schraubverbindungen 44 gekoppelt und bildet in axialer Richtung zum Fahrzeuginneren hin gerichtet einen flanschförmigen Anschlag 45, welcher am Radkörper 7 zum Anliegen kommt.

Das dritte Bauelement 42 weist ebenfalls in radialer Richtung eine flanschartige Verdickung 47 auf, welche ebenfalls wenigstens mittelbar an der Radscheibe bzw. dem Radkörper 7 zum Anliegen kommt. Die Radnabe 8, welche aus wenigstens den drei genannten Elementen 40 bis 42 besteht, ist form- bzw. kraftschlüssig über die Schraubverbindungen 48 mit dem Radkörper 7 verbunden. Die Radnabe 8 bildet somit eine Art glockenförmiges Gehäuse, bestehend aus mehreren Bauteilen, welches in Umfangsrichtung den Achskörper, insbesondere das statortragende Bauelement, im wesentlichen innerhalb der Felge 6 umschließt. Das dritte Bauelement 42 der Radnabe 8 bildet dabei die Anschlagfläche für die Lager der zweiten inneren Lageranordnung 17 hier dem Außenring des Lagers 17. Mit der Radnabe 8 drehfest verbunden ist die Bremsscheibe 50 einer Scheibenbremseinrichtung 51. Diese umfaßt des weiteren entsprechende Betätigungselemente 52. Auch die Bremsscheibe stützt sich damit über die innere Lageranordnung 17 auf dem statortragenden Element 15, insbesondere dem vierten Bauelement 35, ab.

Aufgrund der konstruktiven Ausführung sind weitere Lageranordnungen 55 und 56 erforderlich, wobei die Lageranordnung 55 die Hohlwelle 27 am statortragenden Element 15, insbesondere dem zweiten Bauelement 33 des statortragenden Bauelementes 15, abstützt, während die Lageranordnung 56 den Steg 26.4, bzw. das mit diesem unmittelbar gekoppelte Bauteil am statortragenden Element 15 abstützt. Das statortragende Bauelement 15 ist in der Regel mit dem Achskörper, welcher zwei einander gegenüberliegende Räder miteinander verbindet, befestigt. Der Leistungsfluß, d.h. die an der elektrischen Antriebsmaschine 2 umgewandelte elektrische Leistung in mechanische Leistung erfolgt vom Rotor 3 der elektrischen Antriebsmaschine 4 über den mechanischen Drehzahl-/Drehmomentenwandler 26 auf die Antriebswelle 31 und von da auf die Radnabe 8, welche wiederum mit dem Radkörper 7 und der Felge 6 gekoppelt ist.

Die Verwendung einer elektrischen Antriebsmaschine in Form einer Transversalflußmaschine ermöglicht es, aufgrund von deren hohen Kraftdichte, mit einem einstufigen Planetengetriebe als Drehzahl-/Drehmomentenwandler auszukommen, um die geforderte Steigfähigkeit und Endgeschwindigkeit zu erreichen. Aufgrund der geringen geforderten Anzahl an Bauelementen zur Erbringung der erforderlichen Leistung, insbesondere des entsprechenden Verhältnisses von Drehzahl und Drehmoment, wird es möglich, sowohl die elektrische Antriebsmaschine 2 als auch den Drehzahl-/Drehmomentenwandler 26 zwischen der Radlagerung, d.h. der inneren Lageranordnung 17 und der äußeren Lageranordnung 16 zur Abstützung des Rades auf der Radachse AR anzuordnen. Zusätzlich wird der erforderliche Platz für den Einsatz einer serienmäßigen Scheibenbremseinrichtung geschaffen. Die Betätigungselemente der Scheibenbremseinrichtung 51 sind mit einer derartigen Anordnung frei zugänglich und führen zu keiner Begrenzung der Auslegung der elektrischen Antriebsmaschine 2. Die in der Figur 2 vorgeschlagene Lösung ermöglicht somit die Bereitstellung und Übertragung hoher Leistungen sowie der Einsatz einer standardmäßigen Bremseinrichtung in kompakter Bauweise.

Die elektrische Antriebsmaschine 2 ist frei von einer Abdichtung gegenüber der mechanischen Drehzahl-/Drehmomentenwandlungseinrichtung 26, welche in der Regel mit Schmiermittel versorgt wird. Dadurch wird es möglich, das ohnehin zur Schmierung der mechanischen Drehzahl-/Drehmomentenwandlungseinrichtung 26 bzw. der einzelnen Lageranordnungen erforderliche Schmiermittel gleichzeitig zur Kühlung der elektrischen Antriebsmaschine 2 zu nutzen und somit eine einfache Kühlung zu ermöglichen. Die nicht direkt kühlbaren Bereiche des Rotors 3 werden mittels eines aufgrund von Zerstäubung entstehenden Kühlmittel-Luftgemisches gekühlt. Dazu wird eine bestimmte Menge Schmiermittel der Antriebsvorrichtung 1 zugeführt, welche eine Teilbefüllung der elektrischen Antriebsmaschine 2 ermöglicht. Die Teilbefüllung erfolgt dabei derart, daß zumindest im radial äußeren auch als Luftspalt bezeichneten Zwischenraum 62 in Einbaulage zwischen Rotor 3 und Stator 4 betrachtet, unterhalb der Rotorachse Aᵣₒₜₒᵣ im mathematischen Sinn sich ein Kühlmittelsumpf ausbildet. Im Betrieb der elektrischen Antriebsmaschine, insbesondere der Transversalflußmaschine 2, wird dann das Kühlmittel durch die Rotation des Rotors 3 mitgerissen und aufgrund der dadurch auf das Schmier- bzw. in seiner Funktion als Kühlmittel bezeichnete Fluid wirkenden Kräfte zerstäubt. Es entsteht im wesentlichen in Abhängigkeit von der Drehzahl der Rotorwelle und des Füllungsstandes ein Schmier- bzw. Kühlmittel-Luftgemisch im Luftspalt zwischen Rotor 3 und Stator 4. Dieses übernimmt durch Wärmeströmung und Wärmeübergang den Wärmetransport vom Rotor 3 zum beispielsweise wassergekühlten Stator 4. Das Kühlmittel-Luftgemisch übernimmt dabei im wesentlichen nur den Wärmetransport, weshalb keine zusätzlichen Einrichtungen zur Kühlung des Kühlmittels vorgesehen werden müssen und eine einmalige Teilbefüllung mit Kühlmittel, welches im Inneren der elektrischen Antriebsmaschine 2 verbleibt, ausreicht. Vorzugsweise wird daher als Schmier- bzw. Kühlmittel ein Mittel mit geringer Viskosität, d.h. mit einer geringen inneren Reibung infolge von Kraftwirkungen zwischen den Molekülen verwendet. Dies bietet die Möglichkeit der Wärmeabfuhr auch in den kritischen Bereichen, welche mittels konventionellen Kühlanordnungen nur ungenügend gekühlt werden konnten. Gleichzeitig bietet die Verwendung von Schmiermitteln in Form von Öl zusätzlich die Möglichkeit, einen Korrosionsschutz für den Rotor 3 zu schaffen. Im dargestellten Fall wird die Befüllung vorzugsweise derart vorgenommen, daß in Einbaulage wenigstens der Außenstator in einem unterhalb der Rotorachse in Einbaulage Aᵣₒₜₒᵣ liegenden Bereich wenigstens zum Teil vollständig im Schmiermittel bzw. Kühlmittel liegt. Ein höherer Schmiermittel- bzw. Kühlmittelspiegel ist ebenfalls denkbar. Die Kühlung des Stators 4 kann beispielsweise durch Vorsehen entsprechender Kühlkanäle, hier mit 60 bezeichnet, im Stator bzw. dem statortragenden Element erfolgen. Die Möglichkeit der Rotorkühlung kann als Maßnahme zur zusätzlichen Kühlung in Kombination mit herkömmlichen Kühlmaßnahmen eingesetzt werden. Die Auswahl der geeigneten Kombination der Ölnebelkühlung mit herkömmlichen Kühlanordnungen zur Statorkühlung, insbesondere dem Vorsehen von Kühlkanälen 60 im Stator 4, liegt dabei im Ermessen des Fachmannes und richtet sich nach dem konkreten Einsatzfall. Eine weitere Möglichkeit besteht darin, die Maßnahme der Ölnebelkühlung mit zusätzlichen, bereits bekannten Maßnahmen zur Kühlung des Rotors 3, insbesondere zur lokalen Kühlung von Rotorabschnitten, zu kombinieren. Beispielsweise ist es denkbar, im Stator in der Nähe der Trägerscheibe wenigstens einen Kühlkanal vorzusehen, welcher von einem Kühlfluid durchströmbar ist, wobei der Kühlkanal von der Trägerscheibe nur durch eine Kanalabdeckung minimaler Dicke und dem Zwischenraum zwischen Rotor und Stator abgetrennt ist. Der Kühlkanal kann des weiteren auch im Grundkörper des Stators angeordnet sein. Denkbar ist jedoch theoretisch auch eine Ausführung, bei welcher die Trägerscheibe und die im Bereich der Kühlkanäle gegenüberliegenden Bereiche des Stators mit zueinander komplementären Verzahnungen versehen sind, die im wesentlichen parallel zueinander verlaufende Flächen aufweisen und durch einen Luftspalt voneinander getrennt sind. Bezüglich weiterer möglicher Maßnahmen wird ergänzend auf die Druckschrift DE 43 35 848 A1 verwiesen.

Die Ausführungen entsprechend den Figuren 1 und 2 verdeutlichen Möglichkeiten, wobei die Ausführungen entsprechend der Figur 2 eine bevorzugte Ausführungsvariante darstellt. Diese Möglichkeiten können hinsichtlich der konstruktiven Ausgestaltung und Auslegung jedoch modifiziert werden. Erfindungswesentlich ist lediglich, daß das statortragende Bauelement, insbesondere somit der Stator der elektrischen Antriebsmaschine selbst als Radachse fungiert bzw. dessen Funktion der Abstützung des Rades dient. Der Rotor und die der elektrischen Maschine in Leistungsübertragungsrichtung nachgeschaltete Drehzahl-/Drehmomentenwandlungseinrichtung sind in axialer Richtung betrachtet innerhalb des Bereiches zwischen der inneren Lageranordnung und der äußeren Lageranordnung des Radlagers angeordnet. An diese Einheit kann sich dann ohne Rücksicht auf die Zugänglichkeit eine Bremsvorrichtung, vorzugsweise Scheibenbremseinrichtung in serienmäßiger Ausstattung ohne zusätzliche Modifikationen anschließen. Die konkrete konstruktive Ausgestaltung liegt jedoch im Ermessen des Fachmannes.

## Patentansprüche

1. Radantriebsvorrichtung
1.1 mit einer elektrischen Antriebsmaschine (2), umfassend wenigstens einen Rotor (3) und einen Stator (4);
1.2 der Rotor (3) steht mit der Radnabe (8) wenigstens mittelbar in Triebverbindung;
1.3 die elektrische Antriebsmaschine (2) ist wenigstens teilweise innerhalb eines Bereiches, welcher durch die axiale Erstreckung der Radfelge (6) beschrieben wird, angeordnet;
1.4 ein den Stator (4) tragendes Bauelement (15) bildet die Radachse (AR);
1.5 die Radnabe (8) stützt sich über eine Radlagerung, umfassend eine innere Lagereinheit (17) und eine äußere Lagereinheit (16), wenigstens mittelbar auf der Radachse, ab;
1.6 der Rotor (4) ist in axialer Richtung betrachtet zwischen der inneren Lagereinheit (17) und der äußeren Lagereinheit (16) zur Abstützung der Radnabe (8) auf der Radachse (AR) angeordnet;
1.7 der elektrischen Antriebsmaschine (2) ist in Leistungsübertragungsrichtung eine mechanische Drehzahl-/Drehmomentenwandlungseinrichtung (26) nachgeschaltet, welche wenigstens mittelbar mit der Radnabe (8) koppelbar ist;
1.8 der Rotor (3) und/oder der Stator (4) oder das statortragende Element (15) bilden in radialer Richtung wenigstens jeweils einen äußeren Zwischenraum (62), **dadurch gekennzeichnet, daß**
1.9 Mittel (60) zur Kopplung der Schmiermittelzufuhr zur mechanischen Drehzahl-/Drehmomentenwandlungseinrichtung (26) mit den Zwischenräumen (62) derart vorgesehen sind, daß
1.9.1 sich im Nicht-Betrieb in Einbaulage ein Kühlmittelsumpf bildet, dessen Spiegel sich wenigstens im Bereich des unterhalb der Symmetrieachse der elektrischen Antriebsmaschine liegenden radial äußeren Zwischenraumes zwischen Rotor und Stator einstellt und
1.9.2 bei Betrieb der elektrischen Antriebsmaschine durch die Rotorrotation des Kühlmittel im Zwischenraum zerstäubt wird.

2. Radantriebsvorrichtung nach Anspruch 1, **dadurch gekennzeichnet, daß** der Stator (4) und das statortragende Element (15) von einem Bauteil gebildet sind.

3. Radantriebsvorrichtung nach Anspruch 1, **dadurch gekennzeichnet, daß** der Stator (4) und das statortragende Element (15) von wenigstens zwei Elementen gebildet werden, welche mittels einer kraft- und/oder formschlüssigen und/oder stoffschüssigen Verbindung im Einbauzustand eine bauliche Einheit bilden.

4. Radantriebsvorrichtung nach einem der Ansprüche 1 bis 3, **dadurch gekennzeichnet, daß** die Drehzahl-/Drehmomentenwandlungseinrichtung wenigstens einen Planetenradsatz (30) umfaßt.

5. Radantriebsvorrichtung nach Anspruch 4, **dadurch gekennzeichnet, daß** die Kopplung zwischen dem Planetenradsatz (30) und der Radnabe (8) über eine mit der Radnabe (8) drehfest verbundene Antriebswelle (31), welche mit dem Ausgang des Planetenradsatzes (30) gekoppelt ist, realisiert ist.

6. Radantriebsvorrichtung nach einem der Ansprüche 1 bis 5, **gekennzeichnet durch** die folgenden Merkmale:
6.1 mit einer Bremseinrichtung in Form einer Scheibenbremseinrichtung (51);
6.2 die Bremsscheibe (50) der Scheibenbremseinrichtung (51) ist drehfest mit der Radnabe (8) koppelbar;
6.3 die Bremsscheibe (50) stützt sich über die innere Lagereinheit (17) auf der Radachse (AR) ab.

7. Radantriebsvorrichtung nach Anspruch 6, **dadurch gekennzeichnet, daß** die Scheibenbremseinrichtung (51) in axialer Richtung betrachtet wenigstens teilweise im Bereich der axialen Erstreckung der Felge (6) angeordnet ist.

8. Radantriebsvorrichtung nach einem der Ansprüche 1 bis 7, **dadurch. gekennzeichnet, daß** die elektrische Antriebsmaschine (2) als Transversalflußmaschine ausgeführt ist.

9. Radantriebsvorrichtung nach Anspruch 8, **gekennzeichnet durch** die folgenden Merkmale:
9.1 der Rotor (3) umfaßt eine Trägerscheibe (9) und wenigstens eine sich in axialer Richtung von der Trägerscheibe weg erstreckende und an dieser angeordnete Polstruktur (10,11);
9.2 jede Polstruktur (10,11) umfaßt zwei nebeneinanderliegende, **durch** eine Zwischenlage (20, 21) aus magnetisch und elektrisch nicht leitendem Material (Zwischenring) getrennte Reihen (22, 23, 24, 25) aus in Umfangsrichtung wechselweise magnetisierten Magneten (22a, 23a, 24a, 25a) mit dazwischenliegenden Weicheisenelementen (22b, 23b, 24b, 25b).

10. Radantriebsvorrichtung nach Anspruch 9, **dadurch gekennzeichnet, daß** die Trägerscheibe (9) zwei an beiden Seiten sich in axialer Richtung von der Trägerscheibe (9) weg erstreckende und an dieser angeordnete Polstrukturen (10,11) umfaßt.

11. Radantriebsvorrichtung nach einem der Ansprüche 8 bis 10, **dadurch gekennzeichnet, daß** der Stator (4) wenigstens einen Außenstator (14a, 14b) umfaßt, welcher in radialer Richtung betrachtet auf einem Durchmesser angeordnet ist, welcher größer als der Durchmesser des Außenumfanges des Rotors (3) ist.

12. Radantriebsvorrichtung nach einem der Ansprüche 8 bis 11, **dadurch gekennzeichnet, daß** der Stator (4) einen Innenstator (13b, 14b) umfaßt.

13. Radantriebsvorrichtung nach einem der Ansprüche 1 bis 12, **dadurch gekennzeichnet, daß** die Mittel zur Kopplung und wenigstens mittelbaren Befüllüng eines Teilbereiches der Zwischenräume (62) zwischen Rotor (3) und Stator (4) oder Rotor (3) und statortragendem Element (15) wenigstens einen, im statortragenden Element (15) vorgesehenen und wenigstens indirekt mit der Schmiermittelversorgungseinrichtung koppelbaren Kanal (60) umfassen.

14. Radantriebsvorrichtung nach Anspruch 13, **gekennzeichnet durch** die folgenden Merkmale:
14.1 das statortragende Bauelement (15) bildet für die elektrische Antriebsmaschine (2) ein Gehäuse;
14.2 die Mittel zur wenigstens mittelbaren Befüllung der Zwischenräume (62) umfassen einen mit dem Innenraum des Gehäuses verbundenen und verschließbaren an die Schmiermittelvorrichtung wenigstens mittelbar koppelbaren Zuführkanal;
14.3 der Zuführkanal ist über den Innenraum des Gehäuses mit dem im statortragenden Bauelement vorgesehenen Kanal (60) gekoppelt.

15. Radantriebsvorrichtung nach einem der Ansprüche 13 bis 14, **dadurch gekennzeichnet, daß** die dem Stator (4) zugeordnete Kühleinrichtung wenigstens einen mit einem Kühlmedium befüllbaren und im Grundkörper angeordneten Kanal umfaßt.

## Claims

1. A wheel drive apparatus
1.1 with an electric driving motor (2), comprising at least a rotor (3) and a stator (4);
1.2 with the rotor (3) being drivably connected with the wheel hub (8) at least indirectly;
1.3 with the electric drive machine (2) being disposed at least partly within a zone which is described by the axial extension of the wheel rim (6);
1.4 with a component (15) which supports the stator (4) forming the wheel axle (AR);
1.5 with the wheel hub (8) resting at least indirectly on the wheel axle via a wheel bearing comprising one inner bearing unit (17) and an outer bearing unit (16);
1.6 with the rotor (4), when seen in the axial direction, being arranged on the wheel axle (AR) between the inner bearing unit (17) and the outer bearing unit (18) in order to support the wheel hub (8);
1.7 with a mechanical speed/torque conversion device (26) being provided downstream of the electric driving motor (2), which conversion device can be coupled at least indirectly with the wheel hub (8);
1.8 with the rotor (3) and/or the stator (4) or the stator-bearing element (15) forming in the radial direction at least one outer intermediate space (62) each, **characterized in that**
1.9 means (60) are provided for coupling the lubricant supply to the mechanical speed/torque conversion device (26) with the intermediate spaces (62) in such a way that
1.9.1 in non-operation in the installed position a coolant sump is formed whose level sets at least in the zone of the radially outer intermediate space between rotor and stator, which intermediate space is situated below the axis of symmetry of the electric driving motor, and
1.9.2 in operation of the electric driving motor the coolant is atomized in the intermediate space as a result of the rotor rotation.

2. A wheel drive apparatus as claimed in claim 1, **characterized in that** the stator (4) and the stator-supporting element (15) are formed by one component.

3. A wheel drive apparatus as claimed in claim 1, **characterized in that** the stator (4) and the stator-supporting element (15) are formed by at least two elements which in the installed state form a constructional unit by means of a friction-locked and/or positively locked and/or materially locked connection.

4. A wheel drive apparatus as claimed in one of the claims 1 to 3, **characterized in that** the speed/torque conversion device comprises at least one planet wheel set (30).

5. A wheel drive apparatus as claimed in claim 4, **characterized in that** the coupling between the planet wheel set (30) and the wheel hub (8) is realized through a drive shaft (31) which is torsionally rigidly connected to the wheel hub (8) and which is coupled to the output of the planet wheel set (30).

6. A wheel drive apparatus as claimed in one of the claims 1 to 5,
**characterized by** the following features:
6.1 with a brake device in the form of a disk brake device (51);
6.2 with the brake disk (50) of the disk brake device (51) being couplable in a torsionally rigid manner with the wheel hub (8);
6.3 with the brake disk (50) resting through the inner bearing unit (17) in the wheel axle (AR).

7. A wheel drive apparatus as claimed in claim 6, **characterized in that** the disk brake device (51), when seen in the axial direction, is arranged at least partly in the zone of the axial extension of the wheel rim (6).

8. A wheel drive apparatus as claimed in one of the claims 1 to 7, **characterized in that** the electric drive motor (2) is arranged as a motor with transverse flux.

9. A wheel drive apparatus as claimed in claim 8, **characterized by** the following features:
9.1 the rotor (3) comprises a support disk (9) and at least one pole structure (10, 11) extending away in the axial direction from the support disk and being arranged thereon;
9.2 each pole structure (10, 11) comprises two adjacent rows (22, 23, 24, 25) made of magnets (22a, 23a, 24a, 25a) which are magnetized alternatingly in the circumferential direction and comprise interposed soft-iron elements (22b, 23b, 24b, 25b), which rows are separated by intermediate layer (20, 21) made of a material which is magnetically and electrically not conducting (intermediate ring).

10. A wheel drive apparatus as claimed in claim 9, **characterized in that** the support disk (9) comprises two pole structures (10, 11) which are arranged on the same and extend on both sides in the axial direction away from the support disk (9).

11. A wheel drive apparatus as claimed in one of the claims 8 to 10, **characterized in that** the stator (4) comprises at least one outside stator (14a, 14b) which, when seen in the radial direction, is arranged on a diameter which is larger than the diameter of the outside circumference of the rotor (3).

12. A wheel drive apparatus as claimed in one of the claims 8 to 11, **characterized in that** the stator (4) comprises an inside stator (13b, 14b).

13. A wheel drive apparatus as claimed in one of the claims 1 to 12, **characterized in that** the means for coupling and at least indirect filling of a partial zone of the intermediate spaces (62) between rotor (3) and stator (4) or rotor (3) and stator-supporting element (15) comprise at least one channel (60) which is provided in the stator-supporting element (15) and can be coupled at least indirectly with the lubricant supply device.

14. A wheel drive apparatus as claimed in claim 13, **characterized by** the following features:
14.1 the stator-supporting component (15) forms a housing for the electric drive motor (2);
14.2 the means for the at least partial filling of the intermediate spaces (62) comprises a supply channel which is connected with the inner space of the housing, which is closeable and can be coupled at least indirectly with the lubricant supply device;
14.3 the supply channel is coupled via the inside space of the housing with the channel (60) provided in the stator-supporting component;

15. A wheel drive apparatus as claimed in one of the claims 13 to 14, **characterized in that** the cooling device associated with the stator (4) comprises at least one channel which can be filled with cooling medium and is arranged in the basic body.

## Revendications

1. Dispositif d'entraînement de roue
1.1 avec une machine motrice électrique (2) comprenant au moins un rotor (3) et un stator (4) ;
1.2 le rotor (3) est relié du moins indirectement au moyeu (8) de la roue par une liaison motrice ;
1.3 la machine motrice électrique (2) est disposée, du moins partiellement, au sein d'une région définie par l'extension axiale de la jante (6) de la roue ;
1.4 un élément (15) portant le stator (4) forme l'axe de roue (AR) ;
1.5 le moyeu (8) de la roue est du moins indirectement en appui sur l'essieu par l'intermédiaire d'un roulement de roue comprenant une unité de roulement interne (17) et une unité de roulement externe (16) ;
1.6 vu en direction axiale, le rotor (4) est disposé sur l'axe de roue (AR) entre l'unité de roulement interne (17) et l'unité de roulement externe (16) pour servir d'appui au moyeu (8) de la roue ;
1.7 vu selon la direction de transmission de puissance, un convertisseur de couple/vitesse mécanique (26) est monté en aval de la machine motrice électrique (2), ledit convertisseur étant destiné à être couplé, du moins indirectement, au moyeu (8) de la roue ;
1.8 le rotor (3) et/ou le stator (4) ou l'élément portant le stator (15) forment dans la direction radiale au moins un espace intermédiaire externe (62) chacun,
**caractérisé en ce que**
1.9 des moyens (60) destinés au couplage de l'alimentation en lubrifiant avec les espaces intermédiaires (62) sont prévus de telle sorte que
1.9.1 en position d'installation, le liquide de refroidissement s'accumule au repos, formant une nappe dont le niveau atteint au moins la région de l'espace intermédiaire externe radial ménagé entre le rotor et le stator et situé en dessous de l'axe de symétrie de la machine motrice électrique et
1.9.2 lorsque la machine motrice électrique est en fonctionnement, le liquide de refroidissement est atomisé dans l'espace intermédiaire par la rotation du rotor.

2. Dispositif d'entraînement de roue selon la revendication 1, **caractérisé en ce que** le stator (4) et l'élément portant le stator (15) sont formés par une pièce.

3. Dispositif d'entraînement de roue selon la revendication 1, **caractérisé en ce que** le stator (4) et l'élément portant le stator (15) sont formés par au mois deux éléments formant, une fois installés, une unité structurale par le biais d'une liaison par adhérence, d'une liaison positive et/ou par le fait que les deux éléments sont venus de matière l'un avec l'autre.

4. Dispositif d'entraînement de roue selon l'une quelconque des revendications 1 à 3, **caractérisé en ce que** le convertisseur de couple/vitesse comprend au moins une paire de roues planétaires (30).

5. Dispositif d'entraînement de roue selon la revendication 4, **caractérisé en ce que** le couplage entre la paire de roues planétaires (30) et le moyeu (8) de roue est réalisé par l'intermédiaire d'un arbre menant (31) fixé en rotation au moyeu (8) et couplé à la sortie de la paire de roues planétaires (30).

6. Dispositif d'entraînement de roue selon l'une quelconque des revendications 1 à 5, **caractérisé par** les dispositions suivantes :
6.1 avec un dispositif de freinage sous forme de freins à disque (51) ;
6.2 le disque de frein (50) du dispositif de freins à disque (51) est destiné à être solidaire du mouvement de rotation du moyeu (8) de la roue ;
6.3 le disque de-frein (50) vient en appui sur l'axe de roue (AR) par l'intermédiaire de l'unité de roulement interne (17).

7. Dispositif d'entraînement de roue selon la revendication 6, **caractérisé en ce que**, vu dans la direction axiale, le dispositif de freins à disque (51) est disposé, du moins en partie, dans la région de l'extension axiale de la jante (6).

8. Dispositif d'entraînement de roue selon l'une quelconque des revendications 1 à 7, **caractérisé en ce que** la machine motrice électrique (2) est réalisée sous forme de machine à flux transversal.

9. Dispositif d'entraînement de roue selon la revendication 8, **caractérisé par** les dispositions suivantes :
9.1 le rotor (3) comprend un disque support (9) et au moins une structure polaire (10, 11) se détachant en direction axiale du disque support sur lequel elle est disposée ;
9.2 chaque structure polaire (10, 11) comprend deux rangées (22, 23, 24, 25) d'aimants (22a, 23a, 24a, 25a) magnétisés en alternance dans la direction périphérique et présentant des éléments en fer doux (22b, 23b, 24b, 25b) intercalés placées côte à côte et séparées par une couche intermédiaire (20, 21) en un matériau magnétique et non conducteur de l'électricité (anneau intermédiaire).

10. Dispositif d'entraînement de roue selon la revendication 9, **caractérisé en ce que** le disque support (9) comprend deux structures polaires (10, 11) se détachant, des deux côtés, en direction axiale du disque support (9) sur lequel elles sont disposées.

11. Dispositif d'entraînement de roue selon l'une quelconque des revendications 8 à 10, **caractérisé en ce que** le stator (4) comprend au moins un stator externe (14a, 14b) qui est disposé, vu dans la direction radiale, sur un diamètre supérieur au diamètre de la périphérie externe du rotor (3).

12. Dispositif d'entraînement de roue selon l'une quelconque des revendications 8 à 11, **caractérisé en ce que** le stator (4) comprend un stator interne (13b, 14b).

13. Dispositif d'entraînement de roue selon l'une quelconque des revendications 1 à 12, **caractérisé en ce que** les moyens destinés au couplage et au remplissage du moins indirect d'une partie des espaces intermédiaires (62) ménagés entre le rotor (3) et le stator (4) ou entre le rotor (3) et l'élément portant le stator (15) comprennent au moins un canal (60) prévu dans l'élément portant le stator (15) et destiné à être couplé du moins indirectement à l'alimentation en lubrifiant.

14. Dispositif d'entraînement de roue selon la revendication 13, **caractérisé par** les dispositions suivantes :
14.1 l'élément porteur du stator (15) forme un boîtier pour la machine motrice électrique (2) ;
14.2 les moyens pour le remplissage du moins indirect des espaces intermédiaires (62) comprennent un canal d'amenée relié à l'intérieur du boîtier et fermable, destiné à être couplé du moins indirectement au dispositif de lubrifiant ;
14.3 le canal d'amenée est couplé, par le biais de l'intérieur du boîtier, au canal (60) prévu dans l'élément porteur du stator.

15. Dispositif d'entraînement de roue selon l'une quelconque-des revendications 13 à 14, **caractérisé en ce que** le dispositif de refroidissement associé au stator (4) comprend au moins un canal disposé dans le corps de base et destiné à être rempli d'un liquide de refroidissement.
